# EUROPÄISCHE PATENTANMELDUNG

(11) **EP 3 480 778 A1**
(43) Veröffentlichungstag der Anmeldung: **08.05.2019**
(21) Anmeldenummer: 18205022.9
(22) Anmeldetag: 07.11.2018
(51) Int. Cl.: G06Q 90/00

(54) **VERFAHREN ZUR ZUGANGSKONTROLLE ZU GEFAHRENBEREICHEN**

(30) Priorität: 07.11.2017 DE 102017219726
(71) Anmelder: thyssenkrupp AG, 45143 Essen (DE); thyssenkrupp Hohenlimburg GmbH, 58119 Hagen (DE)
(72) Erfinder: GARTHE, Frank, 58762 Altena (DE); EWERT, Thomas, 58093 Hagen (DE); JUNGJOHANN, Jörg, 58339 Breckerfeld (DE); WOLFF, Oliver, 58285 Gevelsberg (DE)
(74) Vertreter: Richardt Patentanwälte PartG mbB

(57) **Zusammenfassung**

Die Erfindung betrifft ein Verfahren zur Zugangskontrolle zu Gefahrenbereichen (202; 206) durch einen Server (100), wobei der Server (100) einen Prozessor (102) und einen Speicher (106) aufweist, wobei der Speicher durch den Prozessor ausführbare Anweisungen in Form eines Evakuierungsmoduls (108) enthält, wobei das Verfahren eine elektronische Erfassung der Präsenz von Personen in den Gefahrenbereichen (202; 206) durch den Gefahrenbereichen (202; 206) zugeordnete Lesegeräte (208) umfasst, wobei das Erfassen über ein Lesen von den Personen eindeutig zugeordneten ID-Token durch die Lesegeräte (208) erfolgt.

## Beschreibung

Die Erfindung betrifft ein Verfahren zur Zugangskontrolle zu Gefahrenbereichen durch einen Server, ein Verfahren zum Betrieb eines mobilen Telekommunikationsgeräts, ein Computerprogrammprodukt, ein System zur Zugangskontrolle zu Gefahrenbereichen sowie ein mobiles Telekommunikationsgerät.

Im Bereich von Fabrikgeländen und technischen Anlagen kommt es immer wieder zu Krisensituationen, die eine Evakuierung der dort befindlichen Mitarbeiter erforderlich machen. Hierzu können entsprechend ausgebildete Einsatzkräfte die entsprechenden kritischen, von der Evakuierung betroffenen Unternehmensbereiche gezielt nach dort befindlichen Personen durchsuchen, um so eine Rettung dieser Personen herbeizuführen. Dies ist jedoch unter Umständen sehr zeitaufwendig, insbesondere dann, wenn die betroffenen Bereiche über ein gesamtes Fabrikgelände sehr großflächig dimensioniert verteilt. Außerdem geht eine intensive Durchsuchung von Gefahrenbereichen nach dort eventuell noch befindlichen Personen auch mit einer Gefährdung der im Einsatz befindlichen Rettungskräfte einher.

Der Erfindung liegt die Aufgabe zugrunde, diese beschriebenen Nachteile zu beseitigen. Die Aufgabe wird durch die Merkmale der unabhängigen Patentansprüche gelöst. Bevorzugte Ausführungsformen der Erfindung sind in den abhängigen Patentansprüchen angegeben.

Es wird ein Verfahren zur Zugangskontrolle zu Gefahrenbereichen durch einen Server beschrieben, wobei der Server einen Prozessor und einen Speicher aufweist, wobei der Speicher durch den Prozessor ausführbare Anweisungen in Form eines Evakuierungsmoduls enthält, wobei das Verfahren eine elektronische Erfassung der Präsenz von Personen in den Gefahrenbereichen durch den Gefahrenbereichen zugeordnete Lesegeräte umfasst, wobei das Erfassen über ein Lesen von den Personen eindeutig zugeordneten ID-Token durch die Lesegeräte erfolgt, wobei die Ausführung der Anweisungen durch den Prozessor den Server steuert zum:
a) Für die Personen, deren Präsenz erfasst wurde, Abruf von personenspezifischen Daten aus zumindest einer ersten Datenbank, wobei die personenspezifischen Daten Personenstammdaten umfassen,
b) für die Lesegeräte, mit denen die Präsenz der Personen erfasst wurde, Abruf von für den jeweiligen Gefahrenbereich spezifischen Daten aus zumindest einer zweiten Datenbank, wobei die für den Gefahrenbereich spezifischen Daten Ortsangaben des Gefahrenbereichs umfassen,
c) Erzeugen von Evakuierungsdaten, wobei die Evakuierungsdaten die Personenstammdaten der Personen, deren Präsenz erfasst wurde, sowie die für den Gefahrenbereich spezifischen Daten umfassen, wobei die für den Gefahrenbereich spezifischen Daten den personenspezifischen Daten entsprechend der Präsenz der Personen in dem jeweiligen Gefahrenbereich zugeordnet sind,
d) Übermitteln der Evakuierungsdaten an ein mobiles Telekommunikationsgerät zur Zwischenspeicherung der Evakuierungsdaten durch das mobile Telekommunikationsgerät,
e) automatische zyklische Wiederholung der Schritte a) - d) in bestimmten Zeitintervallen.

Ausführungsformen der Erfindung könnten den Vorteil haben, dass zunächst durch das Vorhandensein der Evakuierungsdaten auf dem mobilen Telekommunikationsgerät belastbare Informationen vorliegen, ob und in welchem Umfang Personen in kritischen Unternehmensbereichen wie Kellern oder in bestimmten Maschinenbereichen anwesend sind. Rettungskräfte können somit ihren Einsatz auf jene Bereiche beschränken, von welchen auch tatsächlich bekannt ist, dass dort Personen zu retten sind. Dadurch, dass elektronisch die Präsenz von Personen in entsprechenden Gefahrenbereichen durch ein Lesen von den Personen eindeutig zugeordneten ID-Token durch Lesegeräte erfolgt, welche insbesondere an den Ein- und Ausgängen der Gefahrenbereiche installiert sind, kann zunächst einmal in sehr zuverlässiger Weise eine Anwesenheitsüberwachung von Personen in diesen Gefahrenbereichen realisiert werden. Dies erfolgt auf eine datentechnisch "sehr schlanke" Art und Weise, indem hierfür zunächst lediglich eine eindeutige Identifikation der Personen erforderlich ist, welche daraufhin vom Evakuierungsmodul des Servers zur Abfrage von personenspezifischen Daten aus der ersten Datenbank verwendet wird. Beispielsweise genügt es, eine eindeutige Kennung einer Person von einem der Lesegeräte drahtgebunden oder drahtlos in digitaler Form an den Server zu übermitteln, sodass dieser daraufhin weitere personenspezifische Daten mit den Personenstammdaten aus der ersten Datenbank abfragen kann.

Ebenfalls in datentechnisch sehr schlanker Weise wird an das Evakuierungsmodul des Servers lediglich eine Information in Form einer Kennung übertragen, welche den Server dazu in die Lage versetzt, für den jeweiligen Gefahrenbereich spezifische Daten aus der zweiten Datenbank abzufragen. Auch hier genügt eine zum Beispiel eindeutige Kennung entweder des Lesegeräts oder des Gefahrenbereichs selbst, für welches oder welchen daraufhin das Evakuierungsmodul durch entsprechende Abfrage der zweiten Datenbank die spezifischen Ortsangaben des Gefahrenbereichs abfragen kann.

Aus den personenspezifischen Daten und den Ortsangaben des Gefahrenbereichs können daraufhin Evakuierungsdaten durch das Evakuierungsmodul erzeugt werden und an das mobile Telekommunikationsgerät übermittelt werden.

Da das mobile Telekommunikationsgerät die Evakuierungsdaten zwischenspeichert, kann dies den Effekt bewirken, dass im Notfall selbst bei Ausfall des Servers sichergestellt ist, dass eine Information diesbezüglich vorliegt, für welche Gefahrenbereiche Evakuierungsmaßnahmen durchgeführt werden müssen. Denn üblicherweise wird es zwar so sein, dass beispielsweise bei einem Stromausfall oder auch gar einer kompletten Zerstörung der Serverinfrastruktur der Server und gegebenenfalls seine Backupeinrichtungen betroffen sein können, jedoch mobile Telekommunikationsgeräte selbst nicht. Der Grund ist, dass die mobilen Telekommunikationsgeräte einen erheblichen Teil ihrer Zeit nicht mit dem Stromnetz verbunden sind, welches auch den Server speist, sodass ein Überspannungsschaden diesbezüglich kaum zu befürchten ist. Schließlich muss noch davon ausgegangen werden, dass das obig beschriebene Verfahren im Schritt d) nicht nur für ein einzelnes mobiles Telekommunikationsgerät, sondern für eine Vielzahl mobiler Telekommunikationsgeräte durchgeführt wird, sodass die Wahrscheinlichkeit signifikant hoch ist, dass zumindest auf einem der mobilen Telekommunikationsgeräte aufgrund der Zwischenspeicherung der Evakuierungsdaten diese bei einem entsprechenden Rettungseinsatz zur Verfügung stehen.

Die mobilen Telekommunikationsgeräte oder das mobile Telekommunikationsgerät kann beispielsweise ein Smartphone des Einsatzleiters der Werksfeuerwehr oder auch ein Smartphone sein, welches mobilen Einsatzkräften des Werkschutzes zur Verfügung gestellt sind.

Insofern könnte die vorliegende Erfindung den Vorteil haben, dass selbst in schwerwiegenden Notfällen mit Ausfall eines erheblichen Teils der Serverinfrastruktur Einsatzleiter von Rettungskräfte in der Lage sind, Aussagen darüber zu treffen, ob und wie viele Personen sich in welchen Gefahrenbereichen wie beispielsweise Kellerbereichen oder Kellerzonen (= zusammenhängender Kellerbereich, der über mehrere Zugänge betreten/verlassen werden kann) aufhalten. Insofern muss das Rettungsteam wie beispielsweise die Werksfeuerwehr zur Kontrolle nicht mehr alle Kellergänge abgehen und gibt sich damit selbst nicht in die Gefahrenbereiche. Das Rettungsteam ist in der Lage, die Sicherung von Gefahrenbereichen aufgrund der vorhandenen Evakuierungsdaten priorisiert durchzuführen und somit gegebenenfalls Menschenleben zu retten, da genaue Informationen über den Aufenthaltsort zu rettender Personen vorliegen. Die Evakuierung gefährdeter Bereiche wird damit deutlich verkürzt, da nicht mehr alle Bereiche gesichert werden müssen. Damit verbunden wird auch in Produktionsbereichen die Dauer einer eventuellen Produktionsstörung reduziert.

Der Begriff "ID-Token" bezeichnet eine Vorrichtung, wie beispielsweise ein tragbares elektronisches Gerät, wie beispielsweise einen Transponder oder ein Dokument. Unter einem Transponder wird dabei eine Vorrichtung verstanden, welche über drahtlose Kommunikation mit einem Empfänger kommunizieren kann und dabei in obig beschriebenen Beispielen in der Lage ist, Informationen an entsprechende Lesegeräte zu übertragen, welche eindeutig eine Identifikation der dem ID-Token zugeordnete Personen ermöglicht. Beispielsweise könnte dies eine eindeutige Kennung wie ein alphanummerischer Code sein, welcher drahtlos an das jeweilige Lesegerät übermittelt wird. Eine drahtlose Kommunikation kann dabei eine Nahfeldkommunikation umfassen, beispielsweise eine RFID-Kommunikation.

Gerade die Verwendung der Nahfeldkommunikationstechnik wie der RFID-Technik könnte den Vorteil haben, dass hierdurch in sehr gezielter Weise in einem räumlich stark eingeschränkten Bereich (weniger Genauigkeit, weniger als 1 m, vorzugsweise eine Reichweite < 10 cm) eine Erfassung des ID-Tokens an einem entsprechenden Lesegerät durchgeführt werden kann. Für entsprechend größere und weitläufigere Bereiche könnte es auch möglich sein, andere Funktechnologien wie WLAN oder Bluetooth einzusetzen.

Der Begriff ID-Token kann auch ein Dokument bezeichnen, wobei unter dem Begriff Dokument papierbasierte und/oder kunststoffbasierte Dokumente verstanden wird. Dies umfasst beispielsweise verschiedene Dokumente im Scheckkartenformat, Chipkarten, Firmenausweise und sonstige Berechtigungsnachweise, welche in der Lage sind, eine eindeutige, den Benutzer identifizierende Information zu tragen. Das Dokument selbst kann hierzu einen Sender aufweisen, welcher drahtlos den Benutzer eindeutig identifizierende Information an das Lesegerät übermittelt. Es ist jedoch auch möglich, dass das Dokument eine eindeutige den Benutzer identifizierende Kennung aufgedruckt z.B. in Form eines Barcodes oder eines Alphanumerischen Codes aufweist, sodass der entsprechende Lesevorgang durch das Lesegerät in optischer Weise erfolgt.

Dadurch, dass die Schritte a) bis d) in zyklischer Weise in bestimmten Zeitintervallen wiederholt werden, ist sichergestellt, dass die Evakuierungsdaten auf den mobilen Telekommunikationsgeräten oder dem mobilen Telekommunikationsgerät aktuell gehalten werden. Die bestimmten Zeitintervalle können vordefiniert werden und betragen beispielsweise 5 Minuten, 10 Minuten oder 15 Minuten. Auch andere Zeitintervalle sind möglich. Dadurch, dass somit nicht permanent die Evakuierungsdaten auf den mobilen Telekommunikationsgeräten den aktuellen Gegebenheiten angepasst werden, wird außerdem das Datenübertragungsvolumen und damit auch die Serverlast reduziert.

Beispielsweise können aufgrund des Übermittelns der Evakuierungsdaten an das mobile Telekommunikationsgerät die bisher in dem mobilen Telekommunikationsgerät zwischengespeicherte Evakuierungsdaten durch die aktuell übermittelten Evakuierungsdaten überschrieben werden. Dies könnte den Vorteil haben, dass der Speicherbedarf auf dem mobilen Telekommunikationsgerät minimiert wird.

Um im Evakuierungsfall dennoch in der Lage zu sein, auf möglichst aktuelle Evakuierungsdaten zugreifen zu können, ist nach einer Ausführungsform der Erfindung vorgesehen, dass der Server eine Aktualisierungsanforderung von dem mobilen Telekommunikationsgerät empfängt, wobei dann unabhängig von der zyklischen Wiederholung unmittelbar aufgrund des Empfangs der Aktualisierungsanforderung die Schritte a) bis d) wiederholt werden. Im Evakuierungsfall kann also der Einsatzleiter auf seinem Telekommunikationsgerät, beispielsweise einem Smartphone, PDA, Tabletcomputer, jederzeit eine aktuelle Evakuierungsliste vom Server anfordern, welcher daraufhin - sofern er nicht ausgefallen ist und die Daten liefern kann - die entsprechenden Evakuierungsdaten an das mobile Telekommunikationsgerät zurückübermittelt.

Nach einer Ausführungsform der Erfindung erfolgt das Übermitteln der Evakuierungsdaten durch einen Server an das mobile Telekommunikationsgerät durch einen Push-Mechanismus. Dadurch kann sichergestellt werden, dass seitens des Servers festgelegt werden, in welchen zeitlichen Abständen Evakuierungsdaten tatsächlich an das mobile Telekommunikationsgerät übermittelt werden sollen. So ist denkbar, dass im Normalbetrieb (erster Betriebszustand) der Server die Evakuierungsdaten in einem ersten Zeitintervall wie alle 15 Minuten an das oder die mobilen Telekommunikationsgeräte übermittelt. In einem zweiten Betriebszustand, welcher einer erhöhten Gefahrenstufe entspricht, könnte hingegen das Aktualisierungsintervall verkürzt werden auf ein zweites Aktualisierungsintervall, beispielsweise alle zwei Minuten. Die Anzahl der Betriebszustände und zugehörigen Aktualisierungsintervalle können dabei frei festgelegt werden. Damit könnte es möglich sein, die Aktualisierung der Evakuierungsdaten auf den mobilen Telekommunikationsgeräten entsprechend den aktuellen Sicherheitsanforderungen anzupassen.

Der zweite Betriebszustand könnte beispielsweise dann erforderlich werden, wenn ein Gefahrenzustand vorliegt, jedoch eine aktuelle konkrete Gefährdung noch nicht gegeben ist. Wird beispielsweise auf einem Firmengelände durch einen entsprechenden Transport Material angeliefert, welches aufgrund korrosiver Eigenschaften oder extrem hoher Giftigkeit gesundheitsgefährdend für die dort beschäftigten Mitarbeiter ist, könnte somit der Server vom ersten Betriebszustand auf den zweiten Betriebszustand umgeschaltet werden, sodass gewährleistet ist, dass im Evakuierungsfall "nahezu" in Echtzeit aktuelle Evakuierungsdaten vorliegen. Erst dann, wenn von einem konkreten Unfall auszugehen ist mit Gefährdung eines Bereichs des Firmengeländes, könnte daraufhin der dritte Betriebszustand "Evakuierungsstufe" eingenommen werden und eine Aktualisierung könnte z.B. im 30sec Takt erfolgen.

Es sei angemerkt, dass im Rahmen der vorliegenden Beschreibung die Zeitintervalle der automatischen zyklischen Wiederholung der Schritte a) bis d) auch spezifisch für verschiedene der Gefahrenbereiche festgelegt werden können. So ist es denkbar, dass im obigen Beispiel der Anlieferung des gefährlichen Materials die Evakuierungsdaten lediglich für den gefährdeten Anlieferungsbereich (für diesen Gefahrenbereich) in verkürzten Zeitintervallen aktualisiert werden sowie an das oder die mobilen Telekommunikationsgeräte übermittelt werden können, wohingegen für andere Gefahrenbereiche eine Verkürzung der Zeitintervalle nicht stattfindet. Die Evakuierungsdaten enthalten somit zum einen Daten bezüglich der Präsenz von Personen in allgemeinen Gefahrenbereichen, welche nur beispielsweise alle 15 Minuten aktualisiert werden sowie Daten bezüglich der Präsenz von Personen in dem beschriebenen Anlieferungsbereich, welche alle zwei Minuten aktualisiert werden. Wird nun der Push-Mechanismus noch so gewählt, dass nicht die gesamten Evakuierungslisten, sondern lediglich die sich ändernden Teile der Evakuierungsdaten an das mobile Telekommunikationsgerät gesendet werden, kann dadurch das Datenübertragungsvolumen weiter minimiert werden, ohne jedoch für die aktuell stark gefährdeten Bereiche Einbußen hinsichtlich der Aktualität der Evakuierungsdaten hinnehmen zu müssen.

Nach einer Ausführungsform der Erfindung weist jedes der Lesegeräte einen Satz von zwei Empfänger auf, wobei für jedes Lesegerät ein erster der Empfänger ausschließlich einer Registrierung der ID-Token für den jeweiligen Gefahrenbereich und ein zweiter der Empfänger ausschließlich einer Abmeldung der ID-Token für den jeweiligen Gefahrenbereich zugeordnet ist, wobei eine einem der ID-Token zugeordnete Person als in dem jeweiligen Gefahrenbereich präsent gilt, wenn der ID-Token dieser Person durch den ersten Empfänger gelesen wurde, wobei eine einem der ID-Token zugeordnete Person als in dem jeweiligen Gefahrenbereich nicht mehr präsent gilt, wenn der ID-Token dieser Person durch den zweiten Empfänger gelesen wurde.

Beispielsweise ist für jedes der Lesegeräte der Satz von Empfängern räumlich so voneinander getrennt, dass eine gleichzeitige Erfassung eines gegebenen ID-Tokens durch beide Empfänger vermieden wird. Durch die klare Trennung der Lesegeräte in einem Satz von zwei Empfängern zur Registrierung und Abmeldung der ID-Token könnte sich der Vorteil ergeben, dass Benutzer in sehr einfacher und damit nicht verwirrender Weise in die Lage versetzt werden, den Anmelde- bzw. Abmeldevorgang aus dem entsprechenden Gefahrenbereich vorzunehmen. Damit könnte insbesondere Fehlalarmen vorgebeugt werden, welche daraus resultieren könnten, dass eine Person einen Abmeldevorgang aus einem Gefahrenbereich nicht vornimmt, was dazu führt, dass gegebenenfalls bei zu langer Anwesenheit der betroffenen Person in dem Gefahrenbereich vermutet werden muss, dass dieser Person etwas zugestoßen ist. Umgekehrt könnte ebenfalls vermieden werden, dass durch fehlerhafte mehrfache Abmeldung statt Anmeldung bezüglich eines Gefahrenbereichs der Zutritt der Person zum Gefahrenbereich überhaupt nicht registriert wird.

Nach einer Ausführungsform der Erfindung sind die Lesegeräte zur Registrierung der ID-Token für den jeweiligen Gefahrenbereich und zur Abmeldung der ID-Token für den jeweiligen Gefahrenbereich ausgebildet, wobei eine einem ID-Token zugeordnete Person als in dem jeweiligen Gefahrenbereich dann nicht mehr präsent gilt, wenn die Anwesenheit der dem ID-Token zugeordneten Person in einem anderen Bereich als dem jeweiligen Gefahrenbereich registriert wurde und/oder in eine vorbestimmte erste Zeitdauer nach der Registrierung des ID-Tokens der Person abgelaufen ist. Dies könnte den Vorteil haben, dass die Evakuierungsdaten mit einer sehr hohen Wahrscheinlichkeit die reale Anwesenheit oder Abwesenheit von Personen in Gefahrenbereichen wiedergeben. Erfolgt also beispielsweise nach Registrierung der Anwesenheit eines Mitarbeiters in einem bestimmten Kellerbereich einige Zeit später an einem weiteren Lesegerät die Registrierung desselben Mitarbeiters zum Zutritt zu einem Besprechungsraum oder der Waschkaue, so wird davon ausgegangen, dass diese Person physisch nicht mehr im zuvor registrierten Gefahrenbereich wie dem entsprechenden Keller anwesend sein kann und es wird schlussgefolgert, dass die Person vergessen hatte, sich vom Gefahrenbereich abzumelden.

Das automatische Annehmen, dass eine Person im jeweiligen Gefahrenbereich nicht mehr präsent gilt, wenn die vorbestimmte erste Zeitdauer nach der Registrierung des ID-Tokens der Person abgelaufen ist, könnte den Vorteil haben, dass "unklare Zustände" im System vermieden werden, welche daraus resultieren könnten, dass Personen vergessen haben, sich von einem entsprechenden Lesegerät von einem entsprechenden Gefahrenbereich abzumelden. Trägt die vorbestimmte erste Zeitdauer beispielsweise 14 Stunden, so bereinigt sich das System automatisch bezüglich jeden Mitarbeiters alle 14 Stunden, sofern dieser Mitarbeiter bzw. diese Person sich nicht bereits selbständig aus einem entsprechenden Gefahrenbereich abgemeldet hat und dort in einem entsprechenden Gefahrenbereich nicht länger als bisher 14 Stunden anwesend war.

Möglich ist nach einer Ausführungsform der Erfindung auch, dass die Registrierung der Anwesenheit der dem ID-Token zugeordneten Person in einem anderen Bereich als dem jeweiligen Gefahrenbereich
- ein Verwenden eines der Lesegeräte umfasst, welches nicht dem jeweiligen Gefahrenbereich zugeordnet ist, zur erneuten Registrierung des ID-Token, oder
- ein Anmelden der dem ID-Token zugeordneten Person an einem Zeiterfassungsterminal außerhalb des jeweiligen Gefahrenbereichs umfasst.

Ein Zeiterfassungsterminal wird typischerweise dafür verwendet, um Überzeiten oder Unterzeiten von Mitarbeitern zu erfassen und den Mitarbeitern damit zu ermöglichen, ihre Arbeitszeit bequem zu erfassen. Die Berücksichtigung der Anmeldung der dem ID-Token zugeordneten Person in einem Zeiterfassungsterminal außerhalb des Gefahrenbereichs trägt ebenfalls wiederum zur Bereinigung des Systems und damit der Evakuierungsliste bei, da eine Person nicht gleichzeitig in einem Gefahrenbereich registriert sein kann und sich gleichzeitig an einem Zeiterfassungsterminal befinden kann.

Nach einer Ausführungsform der Erfindung ist die eindeutige Zuordnung jedes ID-Tokens zu der jeweiligen Person über eine eindeutige Kennung gegeben, wobei der Abruf der personenspezifischen Daten aus der ersten Datenbank mittels der eindeutigen Kennung als Primärschlüssel erfolgt. Es sei hier angemerkt, dass die Anmeldung der dem ID-Token zugeordneten Person in einem Zeiterfassungsterminal nicht zwingend mit derselben Kennung erfolgen muss, über welche der ID-Token verfügt. Hier können insbesondere unterschiedliche Kennungen zum Einsatz kommen, welche dann jedoch so verarbeitet werden können, dass eine eindeutige Zuordnung zur ein- und derselben Person möglich ist. Enthält die erste Datenbank nebst den Personenstammdaten auch Daten bezüglich der Zeiterfassung, ist dies problemlos möglich. Kommt hingegen bezüglich der Zeiterfassung eine weitere von der ersten Datenbank unabhängige Datenbank zum Einsatz, könnte ein Datenabgleich zwischen der ersten und dieser weiteren Datenbank dergestalt stattfinden, dass aus der weiteren Datenbank ein eindeutiger Bezeichner der Person ausgelesen wird und sich dieser eindeutige Bezeichner in der ersten Datenbank wiederfindet, sodass ein entsprechender Datenabgleich möglich ist.

Nach einer Ausführungsform der Erfindung umfasst die Erfassung der Präsenz der Personen in den Gefahrenbereichen ein Lesen der durch den ID-Token bereitgestellten eindeutigen Kennung durch eines der Lesegeräte, wobei das Lesen durch Nahfeldkommunikation zwischen dem ID-Token und dem Lesegerät erfolgt.

Nach einer Ausführungsform der Erfindung umfasst das Anmelden der dem ID-Token zugeordneten Person an dem Zeiterfassungsterminal:
- Erfassung des Anmeldevorgangs der dem ID-Token zugeordneten Person an dem Zeiterfassungsterminal durch ein Zeiterfassungsmodul,
- Mitteilung dieser Erfassung des Anmeldevorgangs durch das Zeiterfassungsmodul an das Evakuierungsmodul, wobei die Mitteilung ein Übermitteln von solchen Informationen umfasst, welche dem Evakuierungsmodul die eindeutige Ermittlung der dem ID-Token zugeordneten Person unmittelbar oder unter Verwendung der ersten Datenbank ermöglichen, wobei die Ausführung der Anweisungen des Evakuierungsmoduls den Server ferner steuern zum Registrieren der dem ID-Token zugeordneten Person als in dem jeweiligen Gefahrenbereich nicht mehr präsent auf Basis der übermittelten Informationen.

Nach einer Ausführungsform der Erfindung umfasst das Verfahren ferner einen Zugriff auf eine dritte Datenbank, wobei die dritte Datenbank für jeden der Gefahrenbereiche, für welche die Präsenz der Personen erfasst wurde, folgendes aufweist:
- eine durch das Lesen der ID-Token erfasste Information, wobei die Information eine eindeutige Identifikation der den ID-Token zugeordneten Personen umfasst,
- eine eindeutige Identifikation der Lesegeräte, mit welchen die Informationen von den ID-Token erfasst und gelesen wurde und/oder Ortsangaben der Gefahrenbereiche, für welchen die Informationen von den ID-Token erfasst wurden,
- eine Zeitangabe, zu welchem Zeitpunkt die Informationen von den ID-Token erfasst und gelesen wurden,
wobei der Abruf der personenspezifischen Daten unter Verwendung der eindeutigen Identifikation der Person und der Abruf der für den jeweiligen Gefahrenbereich spezifischen Daten unter Verwendung der eindeutigen Identifikation des Lesegeräts erfolgt.

Beispielsweise ist es möglich, in der dritten Datenbank die elektronische Erfassung der Präsenz von Personen in den Gefahrenbereichen in Echtzeit zu erfassen und zu speichern, sodass die dritte Datenbank grundsätzlich den aktuellen Status der Präsenz von Personen in Gefahrenbereichen wiedergibt. Da damit die dritte Datenbank ausschließlich Verweise auf Personen und Gefahrenbereiche sowie Zeitangaben enthält, kann die dritte Datenbank trotz Echtfähigkeit sehr schlank gehalten werden, was die Servergeschwindigkeit und zusätzlich das Datenverarbeitungsvolumen reduziert.

Erfolgt ein Abmelden einer Person aus einem Gefahrenbereich, entweder durch die Person selbst oder aufgrund einer der obig diskutierten automatischen Mechanismen, so wird in der dritten Datenbank ein entsprechender Anwesenheitseintrag beispielsweise gelöscht, sodass auch hierdurch die dritte Datenbank schlank gehalten werden kann.

Nach einer Ausführungsform der Erfindung umfassen die in Schritt abgerufenen Personenstammdaten einen Basisdatensatz von Personenstammdaten, wobei das Verfahren ferner den Empfang einer Anfrage eines ergänzenden Satzes von Personenstammdaten zu einer in den Evakuierungsdaten angegebenen Person von dem mobilen Telekommunikationsgerät umfassen, wobei der ergänzende Satz von Personenstammdaten nicht in den Evakuierungsdaten enthalten ist, wobei als Antwort auf die Anfrage des ergänzenden Satzes der Personenstammdaten dieser ergänzende Satz der Personenstammdaten aus der ersten Datenbank abgerufen und an das mobile Telekommunikationsgerät übermittelt wird.

Die Anfrage des ergänzenden Satzes von Personenstammdaten kann beispielsweise in der obig diskutierten Aktualisierungsanforderung des mobilen Telekommunikationsgeräts enthalten sein. Dies kann dazu führen, dass die im Normalbetrieb an das mobile Telekommunikationsgerät übermittelten Daten lediglich Grunddaten umfassen, welche zunächst eine Identifikation und Lokalisierung einer Person in eindeutiger Weise ermöglichen. Bei einer entsprechenden Anfrage jedoch werden weitere Daten bezüglich der Person oder auch mehrerer Personen, welche in den Evakuierungsdaten eingegeben sind, an das mobile Telekommunikationsgerät übermittelt, sodass beispielsweise ein Einsatzleiter der Feuerwehr in der Lage ist, sich bezüglich in einem Gefahrenbereich aufhaltende Personen noch ein genaueres Bild der einzuleitenden Rettungsmaßnahmen oder Evakuierungsmaßnahmen zu machen.

Beispielsweise umfasst der Basissatz der Personenstammdaten den bürgerlichen Namen der Person und der ergänzende Satz der Personenstammdaten umfasst ein Lichtbild der Person und/oder Vorerkrankungen der Person und/oder ein Alter der Person und/oder Kontaktdaten einer vorgesetzten Person und/oder eine Kennung eines Kommunikationsgeräts, über welches mit der Person bei der Präsenz im Gefahrenbereich Kontakt aufgenommen werden kann. Die Kennung des Kommunikationsgeräts kann beispielsweise ein Handy der Person sein, oder aber auch ein Pager und allgemein ein beliebiges elektronisches Gerät, welches die Übersendung einer Information an die Person in nahezu Echtzeit ermöglicht. Enthält der ergänzende Satz der Personenstammdaten Informationen bezüglich einer oder mehrerer Vorerkrankungen der Person, so könnte dies den Vorteil haben, dass dem Einsatzleiter ein grober Überblick darüber gegeben wird, ob Evakuierungs- oder Rettungsmaßnahmen mit einer besonderen, die Vorerkrankung berücksichtigenden Dringlichkeit oder unter Mitnahme entsprechender Medikamente und Behandlungsgeräte zu dem Gefahrenbereich notwendig oder erforderlich ist. Ist als Vorerkrankung beispielsweise eine Erkrankung der Atemwege bekannt und es muss davon ausgegangen werden, dass in mehreren Gefahrenbereichen mit dort anwesender Personen mit einer Rauchentwicklung zu rechnen ist, so könnte Gefahrenbereichen mit Personen, die an Atemwegserkrankungen leiden, bei der Evakuierung erhöhte Priorität zugeordnet werden. Ist als Vorerkrankung in der Datenbank hinterlegt, dass eine entsprechende im Gefahrenbereich sich befindende Person Diabetiker ist, so könnte ein entsprechendes Evakuierungsteam bei der Evakuierung dieser Person Insulin mit sich führen, um einem diabetischen Schock entgegenzuwirken, falls dieser eingetreten ist, ohne hierfür erst zu einem späteren Zeitpunkt entsprechende Notfallmaßnahmen anzufordern und einzuleiten.

Die Angabe von Kontaktdaten eines Vorgesetzten der Person könnte den Vorteil haben, dass dieser üblicherweise aufgrund seiner Weisungsfunktion darüber in Kenntnis gesetzt ist, warum die betreffende Person sich im Gefahrenbereich aufhält und mit welchen Aufgaben sie dort betraut ist. Dadurch könnten insbesondere bei räumlich größeren Gefahrenbereichen die Einsatzkräfte in die Lage versetzt werden, Evakuierungsmaßnahmen in räumlich noch gezielterer Weise durchzuführen, da dann eingeschränkt werden kann, in welchem eingeschränkten räumlichen Bereich des Gefahrenbereichs sich die besagte Person befindet.

Nach einer Ausführungsform der Erfindung umfasst das Verfahren ferner den Empfang einer Anfrage von ergänzenden, für den jeweiligen Gefahrenbereich spezifischen Daten zu einem in den Evakuierungsdaten angegebenen Gefahrenbereich von dem mobilen Telekommunikationsgerät, wobei die ergänzenden für den jeweiligen Gefahrenbereich spezifischen Daten nicht in den Evakuierungsdaten enthalten sind, wobei als Antwort auf die Anfrage diese ergänzenden für den jeweiligen Gefahrenbereich spezifischen Daten aus der zweiten Datenbank abgerufen und an das mobile Telekommunikationsgerät übermittelt werden.

Hier könnte derselbe Vorteil bezüglich des minimierten Datenvolumens gelten, wie er bezüglich des Basissatzes von Personenstammdaten obig diskutiert wurde. Der Basissatz der denjeweiligen Gefahrenbereich spezifizierenden Daten ermöglicht grundsätzlich, den Gefahrenbereich als solchen zu identifizieren. Die ergänzenden Daten könnten es Einsatzkräften ermöglichen, eine entsprechende Evakuierung noch gezielter und effektiver durchzuführen und gegebenenfalls erforderliche Gefährdungsbeseitigungsmaßnahmen wie Brandbekämpfungsmaßnahmen effizient durchzuführen.

Zum Beispiel umfassen die ergänzenden für den jeweiligen Gefahrenbereich spezifischen Daten mindestens eine der folgenden Angaben: in diesem Gefahrenbereich befindliches Gefahrgut, befindliche technische Anlagen, installierte Brandbekämpfungseinrichtungen, installierte Kommunikationseinrichtungen sowie installierte Überwachungskameras. Die installierten Kommunikationseinrichtungen könnten es Einsatzkräften ermöglichen, direkt mit in dem jeweiligen Gefahrenbereich befindlicher Personen Kontakt aufzunehmen und Anweisungen zu geben.

Nach einer Ausführungsform der Erfindung ist jeder der Gefahrenbereiche ein räumlich beschränkter Bereich mit einem oder mehreren Zugängen, wobei jedem der Zugänge eines der Lesegeräte zugeordnet ist. Dies könnte den Vorteil haben, dass vermieden wird, dass eine Person Zugang zu einem Gefahrenbereich erhält, ohne dass die Person vorher die Gelegenheit hatte, sich diesbezüglich zu registrieren. Auch dadurch könnte einer hohen Aktualität der Evakuierungsdaten und einer hohen Wahrscheinlichkeit, dass die Evakuierungsdaten die reale Anwesenheit von Personen in Gefahrenbereichen widerspiegeln, Rechnung getragen werden.

Nach einer Ausführungsform der Erfindung versendet nach Ablauf einer vorbestimmten zweiten Zeitdauer nach der Registrierung des ID-Tokens der Person das Evakuierungsmodul eine Alarmmeldung an zumindest einen vorbestimmten Empfänger, wie beispielsweise das mobile Telekommunikationsgerät. Dies könnte den Vorteil haben, dass Vorgänge registriert werden können, aufgrund derer Personen nicht mehr selbständig in der Lage sind, sich aus den Gefahrenbereichen hinauszubegeben. In besonders gefährdeten Bereichen könnte beispielsweise aufgrund einer hohen Strahlenbelastung eine Vorgabe sein, dass sich dort eine Person nicht länger als eine vorbestimmte Zeit, wie beispielsweise 5 Minuten, aufhalten darf. Folgt nun innerhalb der zweiten vorbestimmten Zeitdauer, wie beispielsweise diesen besagten 5 Minuten, keine Abmeldung der Person aus diesem Gefahrenbereich, könnte das System automatisch die Alarmmeldung versenden, sodass daraufhin umgehend Rettungsmaßnahmen der betroffenen Person eingeleitet werden können, da in diesem Fall davon ausgegangen werden muss, dass die Person beispielsweise aufgrund eines Herzinfarkts nicht mehr in der Lage ist, selbständig den Gefahrenbereich zu verlassen.

Möglich ist auch in einer Variante, dass für besonders gefährdete Bereiche ähnlich eines Totmannschalters eine Person sich innerhalb der vorbestimmten zweiten Zeitdauer mit zyklischen Wiederholungen mit dem ID-Token registrieren muss, um damit zu signalisieren, dass sie gesundheitlich unversehrt ist. Läuft nun diese zweite vorbestimmte Zeitdauer ab, ohne dass eine Abmeldung der Person oder neue Registrierung des ID-Tokens zur Signalisierung der Anwesenheit erfolgt ist, muss davon ausgegangen werden, dass dieser Person etwas zugestoßen ist, sodass dann ebenfalls entsprechend Evakuierungsmaßnahmen der Person aus dem Gefahrenbereich eingeleitet werden können. Als Szenario wäre hier beispielsweise die Gefahr einer Entwicklung eines für den Menschen giftigen Gases in dem Gefahrenbereich denkbar, wobei hier die Gefahr besteht, dass bei entsprechender Gasentwicklung die betroffene Person nicht mehr rechtzeitig in der Lage ist, sich in Sicherheit zu bringen.

In einem weiteren Aspekt betrifft die Erfindung ein Verfahren zum Betrieb eines mobilen Telekommunikationsgeräts, wobei das Telekommunikationsgerät einen Prozessor und einen Speicher aufweist, wobei der Speicher durch den Prozessor ausführbare Anweisungen in Form einer Evakuierungsanwendung enthält, wobei die Ausführung der Anweisungen durch den Prozessor das mobile Telekommunikationsgerät steuert zum:
- Empfang von Evakuierungsdaten von einem Server, wobei die Evakuierungsdaten Personenstammdaten von Personen, deren Präsenz in Gefahrenbereichen durch den Gefahrenbereichen zugeordnete Lesegeräte elektronisch erfasst wurden, sowie für die Gefahrenbereiche spezifischen Daten umfassen, wobei die für den Gefahrenbereich spezifischen Daten den personenspezifischen Daten entsprechend der Präsenz der Personen in dem jeweiligen Gefahrenbereich zugeordnet sind,
- Zwischenspeicherung der Evakuierungsdaten durch das mobile Telekommunikationsgerät,
- auf Benutzeranforderung Aufbau einer Evakuierungsliste auf einer grafischen Benutzeroberfläche des mobilen Telekommunikationsgeräts, wobei die Evakuierungsliste die Evakuierungsdaten umfasst.

Nach einer Ausführungsform der Erfindung steuert die Ausführung der Anweisungen durch den Prozessor das mobile Telekommunikationsgerät ferner zum Übermitteln einer Aktualisierungsanforderung an den Server aufgrund einer weiteren Benutzeranforderung, wobei als Antwort auf die Aktualisierungsanforderung Evakuierungsdaten aktualisiert vom Server empfangen werden.

In einem weiteren Aspekt betrifft die Erfindung ein Computerprogrammprodukt mit von einem Prozessor ausführbaren Instruktionen zur Durchführung des obig beschriebenen Verfahrens.

In einem weiteren Aspekt betrifft die Erfindung ein System zur Zugangskontrolle zu Gefahrenbereichen, wobei das System einen Server aufweist, wobei der Server einen Prozessor und einen Speicher aufweist, wobei der Speicher durch den Prozessor ausführbare Anweisungen in Form eines Evakuierungsmoduls enthält, wobei das Verfahren eine elektronische Erfassung der Präsenz von Personen in den Gefahrenbereichen durch den Gefahrenbereichen zugeordnete Lesegeräte umfasst, wobei das Erfassen über ein Lesen eines ID-Token durch die Lesegeräte erfolgt, wobei der ID-Token eindeutig der Person zugeordnet ist, wobei die Ausführung der Anweisungen durch den Prozessor den Server steuert zum:
a) Für die Personen, deren Präsenz erfasst wurde, Abruf von personenspezifischen Daten aus zumindest einer ersten Datenbank, wobei die personenspezifischen Daten Personenstammdaten umfassen,
b) für die Lesegeräte, mit denen die Präsenz der Personen erfasst wurde, Abruf von für den jeweiligen Gefahrenbereich spezifischen Daten aus zumindest einer zweiten Datenbank, wobei die für den Gefahrenbereich spezifischen Daten Ortsangaben des Gefahrenbereichs umfassen,
c) Erzeugen von Evakuierungsdaten, wobei die Evakuierungsdaten die Personenstammdaten der Personen, deren Präsenz erfasst wurde, sowie die für den Gefahrenbereich spezifischen Daten umfassen, wobei die für den Gefahrenbereich spezifischen Daten den personenspezifischen Daten entsprechend der Präsenz der Personen in dem jeweiligen Gefahrenbereich zugeordnet sind,
d) Übermitteln der Evakuierungsdaten an ein mobiles Kommunikationsgerät zur Zwischenspeicherung der Evakuierungsdaten durch das mobile Telekommunikationsgerät,
e) automatische zyklische Wiederholung der Schritte a) - d) in bestimmten Zeitintervallen.

In einem weiteren Aspekt betrifft die Erfindung ein mobiles Telekommunikationsgerät, wobei das Telekommunikationsgerät einen Prozessor und einen Speicher aufweist, wobei der Speicher durch den Prozessor ausführbare Anweisungen in Form einer Evakuierungsanwendung enthält, wobei die Ausführung der Anweisungen durch den Prozessor das mobile Telekommunikationsgerät steuert zum:
- Empfang von Evakuierungsdaten von einem Server, wobei die Evakuierungsdaten Personenstammdaten von Personen, deren Präsenz in Gefahrenbereichen durch den Gefahrenbereichen zugeordnete Lesegeräte elektronisch erfasst wurden, sowie für die Gefahrenbereiche spezifischen Daten umfassen, wobei die für den Gefahrenbereich spezifischen Daten den personenspezifischen Daten entsprechend der Präsenz der Personen in dem jeweiligen Gefahrenbereich zugeordnet sind,
- Zwischenspeicherung der Evakuierungsdaten durch das mobile Telekommunikationsgerät,
- auf Benutzeranforderung Aufbau einer Evakuierungsliste auf einer grafischen Benutzeroberfläche des mobilen Telekommunikationsgeräts, wobei die Evakuierungsliste die Evakuierungsdaten umfasst.

Es sei angemerkt, dass die obig beschriebenen Ausführungsformen in beliebiger Weise miteinander kombiniert werden können, solange sich diese Kombinationen nicht gegenseitig ausschließen.

Im Folgenden werden bevorzugt Ausführungsformen der Erfindung anhand der Zeichnungen näher erläutert. Es zeigen:
- Figur 1: ein Blockdiagramm eines Systems für Zugangskontrolle zu Gefahrenbereichen,
- Figur 2: eine schematische Darstellung von Gefahrenbereichen,
- Figur 3: eine schematische Darstellung eines Lesegeräts mit Empfängern,
- Figur 4: eine Ansicht einer grafischen Benutzeroberfläche eines mobilen Telekommunikationsgeräts,
- Figur 5: ein Flussdiagramm eines Verfahrens zur Zugangskontrolle zu Gefahrenbereichen.

Im Folgenden werden einander ähnliche Elemente mit den gleichen Bezugszeichen gekennzeichnet.

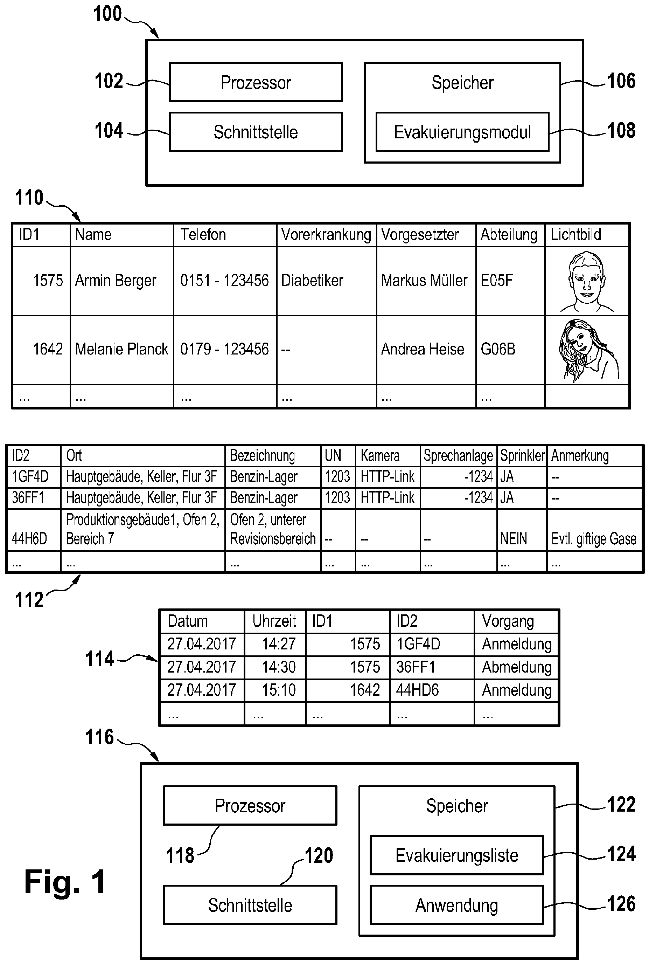

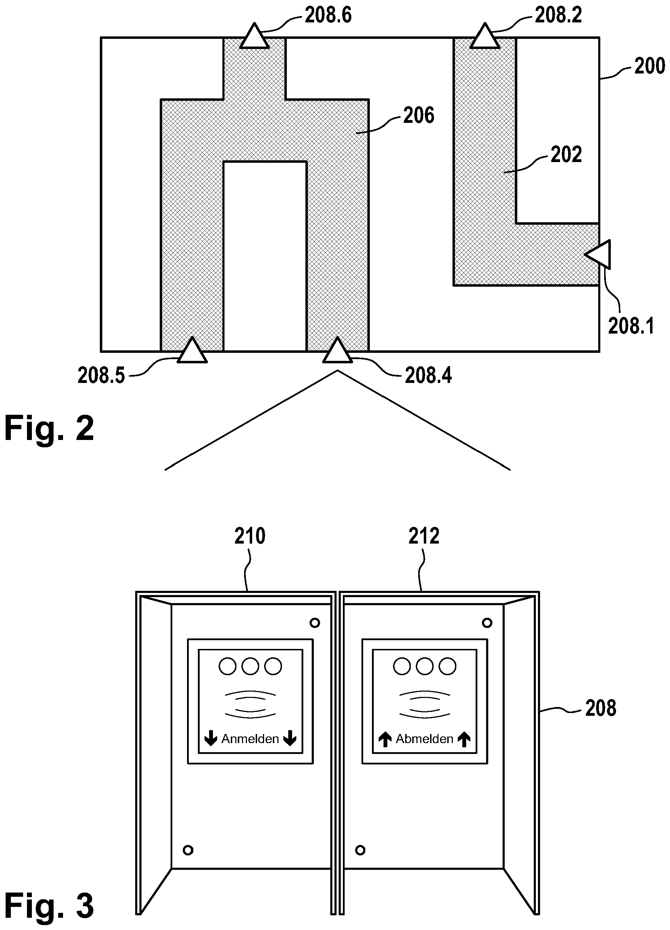

Die Figur 1 zeigt ein System, mit welchem es möglich ist, eine Zugangskontrolle zu Gefahrenbereichen dergestalt zu realisieren, dass auf einem mobilen Telekommunikationsgerät 116 wie beispielsweise einem Smartphone zu jedem Zeitpunkt Evakuierungsdaten in Form einer Evakuierungsliste 124 zur Verfügung stehen. Der Einfachheit halber sei als Ausgangspunkt von jener Situation ausgegangen, wie sie in der Figur 2 mit der Anordnung zweier verschiedener voneinander getrennter Gefahrenbereiche 202 und 206 illustriert ist. Diese Gefahrenbereiche 202 und 206 befinden sich beispielsweise in einem Gebäude 200. Der Gefahrenbereich 202 kann über insgesamt zwei Zugänge betreten und verlassen werden. Jedem dieser Zugänge ist ein Lesegerät zugeordnet, welches exemplarisch mit Bezugszeichen 208 gekennzeichnet in der Figur 3 gezeigt ist.

Jedes Lesegerät 208 besteht wiederum aus einem Satz von zwei Empfängern 210 und 212, wobei der Empfänger 210 zum Anmelden eines ID-Tokens, beispielsweise eines RFID-Chips, der für den Benutzer personalisiert ist, dient und der Empfänger 212 zum Abmelden des RFID-Chips dient. Anmelden bzw. Abmelden des RFID-Chips entsprechen dabei einer Registrierung des Betretens des Bereiches 202 durch die Person bzw. eines Verlassens dieses Gefahrenbereiches 202 durch die Person.

Aufgrund der zwei Zugänge befinden sich nun zwei Lesegeräte 208.1 und 208.2 an den jeweiligen Zugängen zu dem Gefahrenbereich 202.

In der Figur 2 ist ferner ein Gefahrenbereich 206 ersichtlich, welcher nun über drei unterschiedliche Zugänge verfügt, wobei an jedem der Zugänge wiederum ein entsprechendes Lesegerät angeordnet ist, nämlich die Lesegeräte 208.4, 208.5 und 208.6.

Die Gefahrenbereiche 202 und 206 enthalten wie ersichtlich mehrere zusammenhängende Flure, bilden also insgesamt auch eine sogenannte Zone, welche über mehrere Zugänge betreten oder verlassen werden kann.

Ziel ist es nun, dass im Evakuierungsfall beispielsweise ein Einsatzleiter einer Werksfeuerwehr in der Lage ist, eine Aussage darüber zu treffen, in welchen Gefahrenbereichen sich Personen mit einer hohen Wahrscheinlichkeit noch aufhalten und welche Gefahrenbereiche nicht mehr separat durch ein Rettungsteam gesichert werden müssen. So ist zunächst der in Figur 1 skizzierte Server 100 vorgesehen, wobei der Server 100 über einen Prozessor 102 und eine Kommunikationsschnittstelle 104 verfügt. Ferner ist dem Server ein Speicher 106 zugeordnet, welcher ein Evakuierungsmodul 108 in Form von computerausführbaren Instruktionen enthält. Der Server ist in der Lage, auf verschiedene Datenbanken 110, 112 und 114 mittels seiner Schnittstelle 104 zuzugreifen. Außerdem ist der Server 100 in der Lage, mittels der Schnittstelle 104 mit einem mobilen Telekommunikationsgerät 116 zu kommunizieren. Dieses verfügt ebenfalls über eine entsprechende Kommunikationsschnittstelle 120, sodass die Kommunikation zwischen Server und mobilem Telekommunikationsgerät realisiert werden kann. Im Folgenden wird davon ausgegangen, dass der Server 100 unter Verwendung der Datenbank 114 arbeitet. Dies ist jedoch nicht zwingend notwendig, jedoch für eine anschauliche Beschreibung hilfreich.

Betritt nun eine Person beispielsweise den in Figur 2 gezeigten Gefahrenbereich 202, so meldet sich diese Person am Lesegerät 208.1 an. Im Folgenden sei davon ausgegangen, dass dem Lesegerät 208.1 die eindeutige Kennung ID2 "1GF4D" zugeordnet ist. Diese eindeutige Kennung findet sich auch wiederum in der Datenbank 112 wieder. Ferner sei davon ausgegangen, dass die sich mit ihrem ID-Token am Lesegerät 208.1 anmeldende Person Herr "Armin Berger" ist und seinem ID-Token die eindeutige Kennung ID1 "1575" zugeordnet ist.

Die Anmeldung von Armin Berger am Lesegerät 208.1 wird dem Server 100 durch dieses Lesegerät mitgeteilt. Das Lesegerät übermittelt dabei seine ID2-Kennung und die ID1-Kennung von Herrn Berger an den Server 100. Mittels der im Evakuierungsmodul 108 enthaltene Instruktionen ist daraufhin der Server 100 in der Lage, aus der Datenbank 110 den Vor- und Nachnamen von Herrn Berger, also diese Personenstammdaten abzurufen. Unter Zugriff auf die Datenbank 112 kann der Server ferner mittels der im Evakuierungsmodul 108 enthaltenen Instruktionen auf die Datenbank 112 zugreifen und mittels der ID2-Kennung Ortsangaben des Gefahrenbereichs erfassen, welche Herr Berger soeben betreten hat - im vorliegenden Beispiel handelt es sich bei dem Ort um "Hauptgebäude, Keller, Flur 3F". Mindestens diese beiden Angaben bilden die Basis zur Erzeugung von Evakuierungsdaten, wobei diese Evakuierungsdaten in Form einer Evakuierungsliste 124 daraufhin an das mobile Telekommunikationsgerät 116 übermittelt werden. Das mobile Telekommunikationsgerät verfügt über einen Prozessor 118 und einen Speicher 122, wobei im Speicher 122 eine Anwendung 126 enthalten ist, wobei die im Folgenden beschriebenen durch das mobile Telekommunikationsgerät 116 ausgeführten Schritte aus einer Ausführung der Programminstruktionen der Anwendung 126 durch den Prozessor resultieren.

Nach Empfang der Evakuierungsliste 124 wird das mobile Telekommunikationsgerät 116 die Evakuierungsliste 124 im Speicher 122 des mobilen Telekommunikationsgerätes ablegen und zwischenspeichern. Die Zwischenspeicherung wird dabei solange erhalten bleiben, bis entweder ein aktiver Löschbefehl seitens des Benutzers oder aber der Empfang einer neuen aktualisierten Evakuierungsliste stattfindet, woraufhin dann die alte bisher im Speicher befindliche Evakuierungsliste überschrieben werden kann. Selbstverständlich ist es auch möglich, dass eine oder mehrere verschiedene Versionen von Evakuierungslisten über einen bestimmten Zeitraum auf dem mobilen Telekommunikationsgerät zwischengespeichert bleiben.

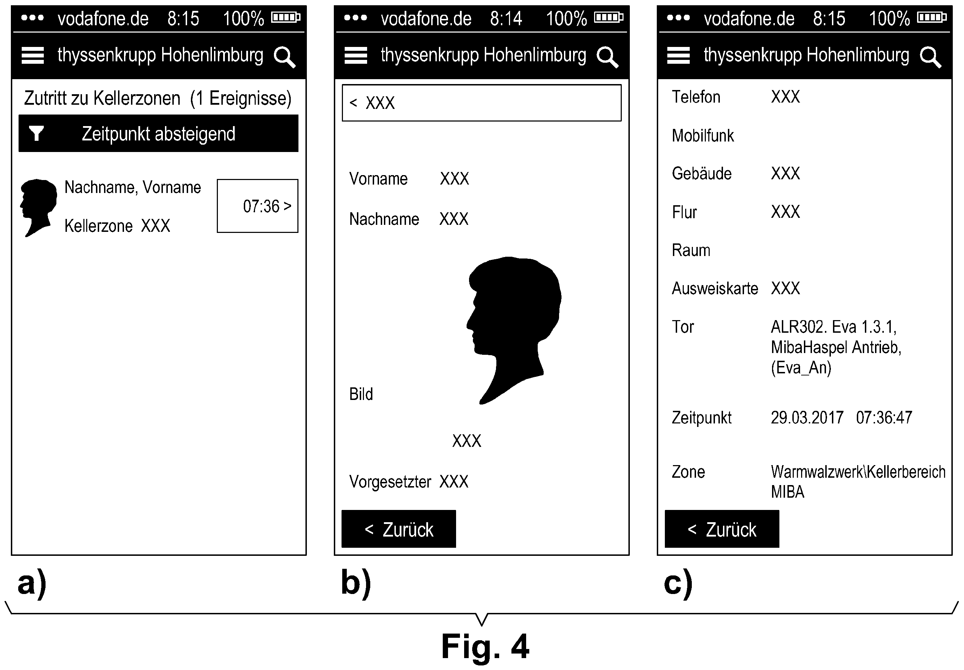

Die Anwendung 126 ist ferner in der Lage, auf Benutzeranforderung eine grafische Benutzeroberfläche auf einem nicht näher gezeigten Display des mobilen Telekommunikationsgeräts 116 anzuzeigen. Beispiele der grafischen Benutzeroberfläche sind in den Figuren 4a, 4b und 4c in Form einer Evakuierungsanwendung gezeigt. Die grafische Benutzeroberfläche wie in der Figur 4a gezeigt gibt das Beispiel wieder, wie im einfachsten Fall unter Verwendung der Evakuierungsliste 124 zu jedem gewünschten Zeitpunkt alle Personen angezeigt werden können, die sich in Gefahrenbereichen aufhalten. Optional ist im vorliegenden Fall die Anzeige eines Lichtbildes und einer Uhrzeit, zu welcher ein entsprechender Gefahrenbereich betreten wurde.

Möchte nun ein Benutzer der grafischen Benutzeroberfläche weitergehende Informationen zu jener Person, im vorliegenden Beispiel Herrn Berger, abfragen, welcher sich offensichtlich im Moment in dem Gefahrenbereich 202 aufhält, so kann über die grafische Benutzeroberfläche eine entsprechende Anfrage vom mobilen Telekommunikationsgerät 116 an den Server 100 gesendet werden. Als Antwort hierauf wird der Server 100 ergänzende Informationen zur Person von Herrn Berger, sowie zum Gefahrenbereich 202 an das mobile Telekommunikationsgerät zurückübermitteln. Entsprechende Beispiele der zurückübermittelten Daten und der entsprechend ergänzten grafischen Benutzeroberfläche sind in den Figuren 4b und 4c gezeigt. Hierzu verfügt die Datenbank 110 über weitergehende Informationen bezüglich sämtlicher Personen, die mit entsprechenden ID-Tokens ausgestattet sind und welche die Gefahrenbereiche betreten könnten. Nebst dem obig erwähnten bürgerlichen Namen umfasst dies beispielsweise eine Telefonnummer, über welche die Person erreicht werden kann, sowie eine Angabe zu eventuellen Vorerkrankungen, welche im Evakuierungsfall eine Rolle spielen könnten. Ferner ist der Name der oder des Vorgesetzten und optional deren oder dessen Kontaktinformation wie Telefonnummer in der Datenbank enthalten, sowie auch eine Angabe darüber, in welcher Arbeitsabteilung der entsprechenden Firma die Person tätig ist. Ein Lichtbild kann ebenfalls in der Datenbank hinterlegt werden, welches daraufhin an das mobile Telekommunikationsgerät auf Anfrage übermittelt wird.

In ähnlicher Weise verfügt die Datenbank 112 bezüglich der Gefahrenbereiche ebenfalls über weiterführende Informationen, beispielsweise eine Beschreibung dessen, was dort für Waren gelagert sind oder ob es sich hierbei um einen bestimmten Maschinenbereich handelt. In der Tabelle 112 ist dies in der Spalte "Bezeichnung" subsummiert. Ferner angegeben kann beispielsweise in der Datenbank zu jedem Gefahrenbereich eine Beschreibung dessen sein, mit welchen Gefahrstoffen in diesen Bereichen zu rechnen ist. Im Beispiel der Datenbank 112 ist hier eine UN-Nummer angegeben, wobei die UN-Nummer 1203 eine Angabe für die Lagerung von Benzin steht. Die Datenbank 112 enthält ebenfalls, soweit für die Gefahrenbereiche verfügbar, Informationen, ob und wie eine entsprechende in den Gefahrenbereich befindliche Kamera oder mehrere Kameras erreichbar sind (http-Link), sowie Informationen, ob dort eine Sprechanlage oder eine Kommunikationseinrichtung wie ein Telefon installiert ist und wie dies oder dieses beispielsweise über welche Telefonnummer zu erreichen ist. Für die Brandbekämpfung wichtig könnte auch die Angabe sein, ob in diesem Bereich eine Sprinkleranlage installiert ist sowie die Angabe weiterer Informationen "Anmerkungen", welche im Evakuierungsfall bezüglich dort befindlicher Personen relevant sein könnte.

Die Datenbank 112 enthält bezüglich des Bereichs 202 "Hauptgebäude, Keller, Flur 3F" zwei Kennungen ID2, nämlich die erste Kennung für das Lesegerät 208.1 und die zweite Kennung für das Lesegerät 208.2.

Die Datenbank 114 dient der Speicherung der Präsenz von Personen in den Gefahrenbereichen. Aus der Tabelle ist ersichtlich, dass am 27. April 2017 Herr Berger um 14:27 Uhr den Bereich 202 durch den Eingang betreten hat, welcher mit dem Lesegerät 208.1 ausgestattet war. Schraffiert dargestellt ist, dass Herr Berger 3 Minuten später den Gefahrenbereich 202 durch jene Tür verlassen hat, welcher das Lesegerät 208.2 zugeordnet ist. Die Schraffur gibt hier an, dass eine solche Speicherung eines Verlassens des Bereichs nicht zwingend notwendig ist und es stattdessen auch ausreichen kann, lediglich den Eintrag bezüglich des Anmeldevorgangs zu löschen. Insofern kann die Datenbank 114 auf die Angabe reduziert werden, in welchen Gefahrenbereichen Personen anwesend sind, denn im Evakuierungsfall ist es unter Umständen nicht so wichtig zu wissen, in welchen Gefahrenbereichen Personen zu einem früheren Zeitpunkt irgendwann einmal anwesend gewesen waren. Nichtsdestotrotz ist es natürlich dennoch möglich, auch dieses in der Datenbank 114 abzuspeichern. Selbst die Angabe von Datum und Uhrzeit ist optional, wenn es darum geht, die Datenbank 114 möglichst kompakt zu gestalten.

Der Vorteil der Verwendung der Datenbank 114 ist, dass hier die An- und Abmeldevorgänge von Personen zu Gefahrenbereichen verfolgt und gesammelt werden können, um daraufhin in bestimmten zeitlichen Intervallen unter Verwendung der Datenbank 114 die Evakuierungsdaten zu erzeugen und an das mobile Telekommunikationsgerät 116 zu senden. Das mobile Telekommunikationsgerät muss also nicht permanent in Echtzeit mit Evakuierungslisten versorgt werden, sondern es kann hier genügen, dass beispielsweise alle 15 Minuten eine entsprechend aktualisierte Evakuierungsliste an das mobile Telekommunikationsgerät gesendet wird. Möglich ist auch, dass in vorbestimmten Zeitintervallen lediglich Änderungen von Daten an das mobile Telekommunikationsgerät übermittelt werden, sodass nicht Evakuierungslisten in ihrer gesamten Länge übermittelt werden müssen, sondern lediglich eine Angabe diesbezüglich, welche Informationen sich seit der letzten Änderung ergeben haben. Selbstverständlich erfordert dies das Vorhandensein einer Evakuierungsliste 124 auf dem mobilen Telekommunikationsgerät 116, welche die Basis bildet, bezüglich welcher die Veränderungen an der Liste vorgenommen werden. Dies kann dadurch realisiert werden, dass in vorbestimmten größeren Zeitintervallen der Server 100 eine vollständige Evakuierungsliste an das mobile Telekommunikationsgerät sendet und/oder das mobile Telekommunikationsgerät immer dann eine vollständige Evakuierungsliste anfordert, wenn es die letzte Aktualisierung seitens des Servers verpasst hat. Ein Verpassen der letzten Evakuierungsliste könnte dadurch resultieren, dass das mobile Telekommunikationsgerät für einen bestimmten Zeitraum nicht mit dem Server in Kommunikationsverbindung stand.

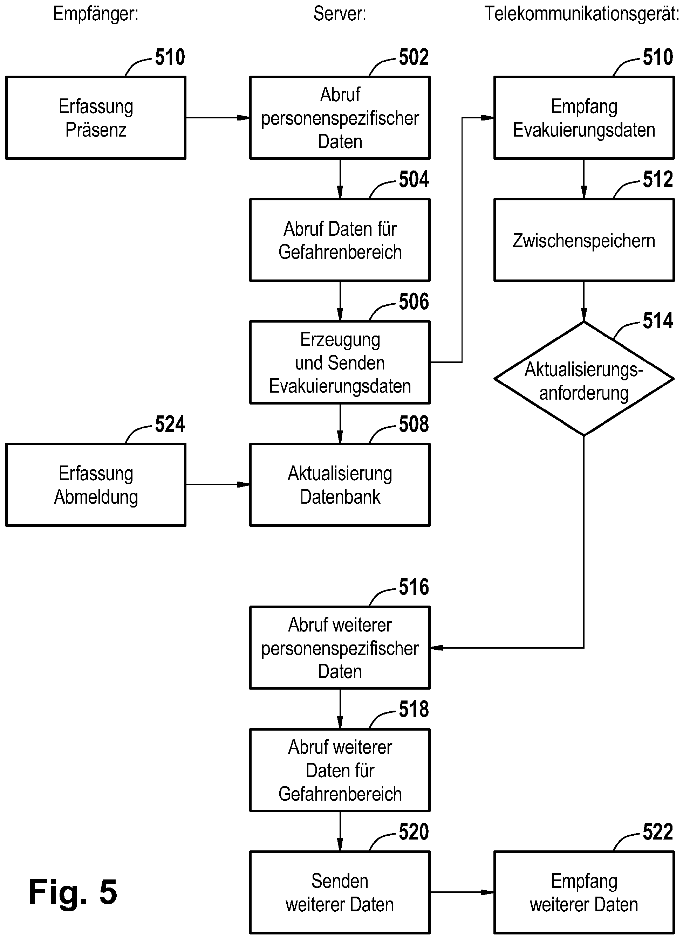

Das obig beschriebene Verfahren sei im Folgenden nochmals mit Bezug auf das Flussdiagramm der Figur 5 wie folgt zusammengefasst. In Block 100 erfolgt die Erfassung der Präsenz einer Person, beispielsweise der Person Armin Berger mit Kennung ID1 "1575" im Gefahrenbereich 202 mit Kennung ID2 "1GF4D". Die Erfassung der Präsenz wird dem Server übermittelt, welcher darauf in Schritt 502 auf Basis der ID1 personenspezifische Daten wie beispielsweise den Namen, welcher zu dieser eindeutigen Kennung gehört, aus einer entsprechenden Datenbank abruft. Ebenfalls wird der Server in Schritt 104 Daten für den Gefahrenbereich, der mit der Kennung ID 2 eindeutig eingegeben wurde, abrufen. Aus den personenspezifischen Daten und den Daten für den Gefahrenbereich wird daraufhin in Schritt 406 der Server Evakuierungsdaten erzeugen und diese an das Telekommunikationsgerät senden. In Schritt 510 empfängt das Telekommunikationsgerät die Evakuierungsdaten und speichert diese in Schritt 512 in seinem Speicher ab. Die Daten werden dort dauerhaft zwischengespeichert.

Wird nun über eine insbesondere grafische Benutzeroberfläche in Schritt 514 eine Aktualisierungsanforderung durch einen Benutzer des Telekommunikationsgeräts empfangen, so sendet das Telekommunikationsgerät eine entsprechende Anfrage an den Server. Nach Empfang dieser Anfrage wird in Schritt 516 der Server weitere personenspezifische Daten von der zugehörigen Datenbank und in Schritt 518 weitere Daten für den Gefahrenbereich aus der entsprechenden Datenbank auslesen und in Schritt 520 diese weiteren Daten an das Telekommunikationsgerät zurückübermitteln. Das mobile Telekommunikationsgerät empfängt diese weiteren Daten in Schritt 522 und kann diese daraufhin aufbereitet auf seiner grafischen Benutzeroberfläche anzeigen.

Es sei angemerkt, dass sich die Aktualisierungsanforderung aus Schritt 514 auf einzelne Personen in Gefahrenbereichen beziehen kann, jedoch auch die gesamte verfügbare Evakuierungsliste betreffen kann.

Zur anschaulichen Beschreibung der Erfindung werden im Folgenden verschiedene Ausführungsformen der Erfindung nochmals beispielhaft wie folgt zusammengefasst:
Vereinfacht gesprochen erhalten alle Personen, die bei einer Firma mit Gefahrenbereichen das Werksgelände betreten einen personalisierten Ausweis. Dieser personalisierte Ausweis entspricht dem ID-Token. Ausweisnummer (ID1) und Personendaten wie Namen, Arbeitgeber und Handynummer, werden in einer oder mehrerer Datenbanken, beispielsweise der Datenbank 110, zugriffsgesichert dokumentiert. Die Mitarbeiter der Firma können beispielsweise in einer zentralen Personaldatenbank hinterlegt werden, die Daten externer Personen in einer zentralen Besucherdatenbank.

Sämtliche Personen, welche einen Gefahrenbereich betreten, registrieren sich beim Zugang mit ihrem personalisierten Ausweis an entsprechend installierten Kartenlesern, wie sie in der Figur 3 gezeigt sind. Der Kartenleser 210 kann beispielsweise in roter Farbe hinterlegt sein, um damit visuell klarzustellen, dass ein Anmeldevorgang stattfindet. Beim Verlassen eines Gefahrenbereichs wird der Kartenleser 212, welcher mit grüner Farbe hinterlegt ist, benutzt, um sich abzumelden und zu signalisieren, die Person befindet sich in Sicherheit. Beim An- und Abmeldevorgang liest der Kartenleser die ID1 des Ausweises aus und speichert diese eindeutige ID1 sowie die eindeutige Nummer des Kartenlesers und optional Datum/Uhrzeit in einer Datenbank wie beispielsweise der Datenbank 114 zugriffsgesichert ab. Beispielsweise handelt es sich bei der Datenbank 114 um eine SQL-Zutrittsdatenbank.

Im Evakuierungsfall kann sich der Einsatzleiter bereits auf dem Weg zum Einsatzort über die entsprechende Anwendung 126 eine Übersicht über die Personen verschaffen, die sich in den entsprechenden Gefahrenbereichen über die jeweiligen Lesegeräte angemeldet haben und bis zum Zeitpunkt der Datenbankabfrage nicht wieder abgemeldet haben. Die Abfrage kann durch den Einsatzleiter online per Knopfdruck aktualisiert werden, sodass er immer einen aktuellen Überblick darüber erhält, wie viele Personen sich insgesamt in den Gefahrenbereichen aufhalten, wie viele Personen aufgeschlüsselt sich noch in den jeweiligen Gefahrenbereichen befinden und außerdem bezüglich persönlicher Informationen zu den Personen, die sich noch in den Gefahrenbereichen aufhalten.

Es sei angemerkt, dass die Evakuierungslisten selbstverständlich nicht nur an einem mobilen Telekommunikationsgerät verwendet werden können, sondern auch beispielsweise an einem Einsatzleitrechner der Feuerwehr oder anderen beliebigen Computern.

Da die Evakuierungslisten nun verfügbar sind, kann der Einsatzleiter eine Aussage zur aktuellen Situation von Personen in den Gefahrenbereichen treffen, insbesondere die Frage beantworten, wie viele Personen sich zum jeweils aktuellen Zeitpunkt in welchem Gefahrenbereich befinden. Da der Einsatzleiter erkennt, wie viele Personen sich in welchen Gefahrenbereichen aufhalten, kann somit ein weiterer Einsatz priorisiert werden. Der Einsatzleiter kann den Abruf der persönlichen Informationen direkt vor Ort wie folgt nutzen:
- Ein Foto der in dem Gefahrenbereich befindlichen Person ermöglicht die visuelle Kontrolle, ob der Mitarbeiter sich ohne Abmelden am entsprechenden Kartenleser aus dem Gefahrenbereich entfernt hat. Es kann eine Verfahrensanweisung ergehen, dass sich die Person dann unverzüglich beim Einsatzleiter zurückzumelden hat.
- Name und Rufnummer der Person, die sich noch im Gefahrenbereich befindet: Dies ermöglicht, dass der Einsatzleiter mit dem Smartphone direkt aus der Anwendung 126 heraus mit der Person Kontakt aufnehmen und Informationen zum Aufenthaltszustand und aktuellen Gesundheitszustand abfragen kann.
- Nummer und Rufnummer des Vorgesetzten: Dies ermöglicht, dass der Einsatzleiter mit dem Smartphone direkt aus der Anwendung 126 heraus mit dem Fachvorgesetzten der Person Kontakt aufnehmen und Informationen über die Dienstleistungen und den Gefahrenbereich erfragen kann, und so gegebenenfalls den Gefahrenbereich weiter einschränken kann. Letzteres hat insbesondere den Vorteil, dass bei größeren Gefahrenbereichen bei einer konkreten Dienstleistung wie Abfüllen einer Flüssigkeit in Behälter 123 für den Einsatzleiter deutlich ist, an welcher Stelle dies offensichtlich in dem Gefahrenbereich stattfindet.
- Bezeichnung des Kartenlesers, an dem sich die Person beim Zugang zum Keller registriert hat: Dies hat den Vorteil, dass der Einsatzleiter sein Einsatzteam gezielter an den vermeintlichen Aufenthaltsort der Person führen kann.

Insgesamt kann der Einsatzleiter aufgrund der ihm vorliegenden Informationen qualitativ hochwertige Entscheidungen über den Bedarf zusätzlicher Einsatzteams treffen. Außerdem wird dadurch die Gefahr für die eigenen Rettungsteams reduziert, da diese entweder gar nicht oder aber nur gezielt in entsprechende Gefahrenbereiche ausgesendet werden müssen. Die Einsatzdauer und damit die Produktionsunterbrechung werden deutlich verkürzt und Kosten reduziert, da aufgrund der vorliegenden Informationen nicht alle Gefahrenbereiche kontrolliert werden müssen.

Voraussetzung hierfür ist, dass alle Kellerbereiche elektronisch aufgenommen und dokumentiert werden. In Abstimmung mit verantwortlichen technischen Fachbereichen, der Werkfeuerwehr und der Arbeitssicherheitsfachkraft sollten zusammenhängenden Gefahrenbereiche (= Gefahrenzonen) identifiziert und eindeutig beschriftet werden. An allen Zu- und Ausgängen zu Gefahrenbereichen sollten jeweils zwei Kartenlesegeräte in farblich gekennzeichneten Schutzrahmen montiert werden, vgl. Figur 3.

Die Anwendung 126 kann beispielsweise über eine Suchfunktion verfügen, um so in schneller und zuverlässiger Weise nach bestimmten Personen zu suchen. Die Evakuierungslisten sollten sich nach Datum auf- und absteigend sortieren lassen, was einen zielführenden Informationsabruf ermöglicht. Das mobile Telekommunikationsgerät kann über das GSM-, UMTS-Datennetz, aber auch über WLAN oder Bluetooth mit dem Server 100 kommunizieren.

Eine weitere Einsatzmöglichkeit des Servers 100 besteht darin, dass unter Verwendung zusätzlicher Registrierungsmöglichkeiten für Angehörige der Werksfeuerwehr einer Firma die Möglichkeit geschaffen wird, durch entsprechende Registrierung an entsprechenden Lesegeräten zu signalisieren, dass und ob sie für einen entsprechenden Feuerwehreinsatz zur Verfügung stehen. Dies ermöglicht zu jedem gewünschten Zeitpunkt den Abruf der Personen, die zum Werksfeuerwehrteam gehören und für den Einsatz zur Verfügung stehen (Feuerwehrliste). Mithilfe dieser Funktion kann der Einsatzleiter zielführend entscheiden, ob und in welchem Umfang weitere Rettungsteams eingesetzt werden können. Das Evakuierungsmodul 108 und optional auch direkt die Anwendung 126 greifen auf Daten zu, die in unterschiedlichen Datenbanken, wie beispielsweise die Datenbanken 110, 112 und 114 gespeichert sind. Es ist also durchaus möglich, dass zur Bereitstellung weiterer Informationen bezüglich der Gefahrenbereiche bzw. der in den Gefahrenbereichen befindlichen Personen das mobile Telekommunikationsgerät 116 hierzu direkt auf die entsprechenden Datenbanken zugreift und diese Daten abfragt. Wie obig beschrieben ist es jedoch auch möglich, dass dies über den Server 100 erfolgt.

Grundsätzlich können proprietäre Daten über SQL-Abfragen wie folgt miteinander verknüpft werden, wobei Primärschlüssel für alle Datensätze die personalisierte und eindeutige ID1 der Personen ist:
- Der Serverprozess ruft zyklisch die Ausweisdaten sowie alle persönlichen Daten (Name, Organisationseinheit, Foto, Festnetztelefonnummer, Mobilfunknummer, Vorgesetzter) aller Mitarbeiter aus der zentralen Datenbank sowie die Ausweisdaten und persönlichen Daten (Name, Arbeitgeber, Mobilfunknummer) aller angemeldeter Besucher und Systempartner aus der entsprechenden Datenbank ab. Hierbei kann sowohl eine Mitarbeiterdatenbank als auch eine Besucherdatenbank getrennt zum Einsatz kommen. Ferner wird eine aktuelle Zuordnungstabelle, Kartenleser (differenziert nach Anmelden und Abmelden) zu entsprechendem Gefahrenbereich vorgehalten, siehe Tabelle 112.
- Der Server ruft beim Abruf bzw. beim Aktualisieren der Liste die Registrierungsereignisse aller Zutrittsleser und optional Zeiterfassungsgeräte der vergangenen 24 Stunden aus der Zutrittsdatenbank ab und erzeugt aus diesen Informationen die entsprechenden Listen, die bei Bedarf auf Knopfdruck durch den Anwender des mobilen Telekommunikationsgeräts 116 aktualisiert werden können.
- Erfolgt nach einer Registrierung einer Person in einem Gefahrenbereich eine Buchung dieser Person in einem weiteren Zutrittsleser wie beispielsweise einem Besprechungsraum oder einer Waschkaue oder einem Zeiterfassungsterminal, wird die Person aus dem vorigen Gefahrenbereich ausgebucht, da sie ja physisch nicht mehr im Gefahrenbereich befindlich sein kann, sie hat zum Beispiel sich vergessen abzumelden. Erfolgt außerdem nach einer Registrierung der Anwesenheit einer Person in einem Gefahrenbereich 1 ohne Abmeldung eine weitere Registrierung der Anwesenheit derselben Person in einem Gefahrenbereich 2, so wird der Gefahrenbereich 2 als der aktuelle Aufenthaltsort ausgegeben. Möglich ist auch, dass verschiedene Ausweise wie beispielsweise Werksausweise korreliert werden, das heißt beim Anmelden mit einem Werksausweis und Abmelden mit einem Schlüsselanhänger, welcher einen RFID-Chip mit Kennung ID1 aufweist, werden über den personalisierten Mitarbeiter berücksichtigt, wobei aufgrund dieser Korrelation von verschiedenen Ereignistypen eine hohe Wahrscheinlichkeit für die Anwesenheit von Personen in Gefahrenbereichen erzielt wird.

Ebenfalls in die Anwendung 126 integriert sein kann die Möglichkeit, dass berechtigte Mitarbeiter des Werkschutzes und der Werksfeuerwehr Statusinformationen zu allen Mitgliedern der Werkfeuerwehr abrufen können. Dies kann alle beispielsweise 300 Sekunden automatisch oder per Knopfdruck manuell online aktualisiert werden. So hat der Einsatzleiter permanent einen aktuellen Überblick über die einsetzbare Truppenstärke und kann auch direkt vom Einsatzort aus Verstärkung anfordern oder über die hinterlegte Rufnummer Kontakt mit dem Kollegen via GSM-Netz aufnehmen. Erreicht ein Mitglied im Alarmierungsfall die Einsatzzentrale der Werksfeuerwehr, registriert er sich dort mit seinem Werksausweis in einem separaten Kartenleser und der Anwesenheitsstatus Mitglied der Werksfeuerwehr wird analog "Kontrolle Zugänge/Evakuierung" über integrierte Datenbankabfragen gegen den zentralen Server 100 ermittelt.

### Bezugszeichenliste

- 100: Server
- 102: Prozessor
- 104: Schnittstelle
- 106: Speicher
- 108: Evakuierungsmodul
- 110: Datenbank
- 112: Datenbank
- 114: Datenbank
- 116: mobiles Telekommunikationsgerät
- 118: Prozessor
- 120: Schnittstelle
- 122: Speicher
- 124: Evakuierungsliste
- 126: Anwendung
- 200: Gebäude
- 202: Gefahrenbereich
- 206: Gefahrenbereich
- 208: Lesegerät
- 210: Empfänger
- 212: Empfänger

## Patentansprüche

1. Verfahren zur Zugangskontrolle zu Gefahrenbereichen (202; 206) durch einen Server (100), wobei der Server (100) einen Prozessor (102) und einen Speicher (106) aufweist, wobei der Speicher durch den Prozessor ausführbare Anweisungen in Form eines Evakuierungsmoduls (108) enthält, wobei das Verfahren eine elektronische Erfassung der Präsenz von Personen in den Gefahrenbereichen (202; 206) durch den Gefahrenbereichen (202; 206) zugeordnete Lesegeräte (208) umfasst, wobei das Erfassen über ein Lesen von den Personen eindeutig zugeordneten ID-Token durch die Lesegeräte (208) erfolgt, wobei die Ausführung der Anweisungen durch den Prozessor den Server (100) steuert zum:
a) Für die Personen, deren Präsenz erfasst wurde, Abruf von personenspezifischen Daten aus zumindest einer ersten Datenbank (110), wobei die personenspezifischen Daten Personenstammdaten umfassen,
b) Für die Lesegeräte (208), mit denen die Präsenz der Personen erfasst wurde, Abruf von für den jeweiligen Gefahrenbereich (202; 206) spezifischen Daten aus zumindest einer zweiten Datenbank (112), wobei die für den Gefahrenbereich (202; 206) spezifischen Daten Ortsangaben des Gefahrenbereichs (202; 206) umfassen,
c) Erzeugen von Evakuierungsdaten (124), wobei die Evakuierungsdaten (124) die Personenstammdaten der Personen, deren Präsenz erfasst wurde, sowie die für den Gefahrenbereich (202; 206) spezifischen Daten umfassen, wobei die für den Gefahrenbereich (202; 206) spezifischen Daten den personenspezifischen Daten entsprechend der Präsenz der Personen in dem jeweiligen Gefahrenbereich (202; 206) zugeordnet sind,
d) Übermitteln der Evakuierungsdaten (124) an ein mobiles Telekommunikationsgerät (116) zur Zwischenspeicherung der Evakuierungsdaten (124) durch das mobile Telekommunikationsgerät (116),
e) Automatische zyklische Wiederholung der Schritte a)-d) in bestimmten Zeitintervallen.

2. Verfahren nach Anspruch 1, wobei aufgrund des Übermittelns der Evakuierungsdaten (124) an das mobile Telekommunikationsgerät (116) die bisher in dem mobilen Telekommunikationsgerät zwischengespeicherten Evakuierungsdaten (124) durch die aktuell übermittelten Evakuierungsdaten (124) überschrieben werden.

3. Verfahren nach einem der vorigen Ansprüche, ferner umfassend den Empfang einer Aktualisierungsanforderung von dem mobilen Telekommunikationsgerät, wobei unabhängig von der zyklischen Wiederholung unmittelbar aufgrund des Empfangs der Aktualisierungsanforderung die Schritte a)-d) wiederholt werden.

4. Verfahren nach einem der vorigen Ansprüche, wobei das Übermitteln der Evakuierungsdaten (124) durch einen Server (100) an das mobile Telekommunikationsgerät (116) durch einen Push-Mechanismus erfolgt.

5. Verfahren nach einem der vorigen Ansprüche, wobei jedes der Lesegeräte (208) einen Satz von zwei Empfängern (210; 212) aufweist, wobei für jedes Lesegerät (208) ein erster (210) der Empfänger ausschließlich einer Registrierung der ID-Token für den jeweiligen Gefahrenbereich (202; 206) und ein zweiter (212) der Empfänger ausschließlich einer Abmeldung der ID-Token für den jeweiligen Gefahrenbereich (202; 206) zugeordnet ist, wobei eine einem der ID-Token zugeordnete Person als in dem jeweiligen Gefahrenbereich (202; 206) präsent gilt, wenn der ID-Token dieser Person durch den ersten Empfänger (210) gelesen wurde, wobei eine einem der ID-Token zugeordnete Person als in dem jeweiligen Gefahrenbereich (202; 206) nicht mehr präsent gilt, wenn der ID-Token dieser Person durch den zweiten Empfänger (212) gelesen wurde.

6. Verfahren nach Anspruch 5, wobei für jedes der Lesegeräte (208) der Satz von Empfängern (210; 212) räumlich so voneinander getrennt ist, dass eine gleichzeitige Erfassung eines gegebenen ID-Tokens durch beide Empfänger vermieden wird.

7. Verfahren nach einem der vorigen Ansprüche, wobei die Lesegeräte (208) zur Registrierung der ID-Token für den jeweiligen Gefahrenbereich (202; 206) und zur Abmeldung der ID-Token für den jeweiligen Gefahrenbereich (202; 206) ausgebildet sind, wobei eine einem der ID-Token zugeordnete Person als in dem jeweiligen Gefahrenbereich (202; 206) nicht mehr präsent gilt,
- wenn die Anwesenheit der dem ID-Token zugeordneten Person in einem anderen Bereich als dem jeweiligen Gefahrenbereich (202; 206) registriert wurde und/oder
- wenn eine vorbestimmte erste Zeitdauer nach der Registrierung des ID-Tokens der Person abgelaufen ist.

8. Verfahren nach Anspruch 7, wobei die Registrierung der Anwesenheit der dem ID-Token zugeordneten Person in einem anderen Bereich als dem jeweiligen Gefahrenbereich (202; 206) umfasst:
- ein Verwenden eines der Lesegeräte (208), welches nicht dem jeweiligen Gefahrenbereich (202; 206) zugeordnet ist, zur erneuten Registrierung des ID-Token,
- ein Anmelden der dem ID-Token zugeordneten Person an einem Zeiterfassungsterminal außerhalb des jeweiligen Gefahrenbereichs (202; 206).

9. Verfahren nach einem der vorigen Ansprüche, wobei die eindeutige Zuordnung jedes ID-Token zu der jeweiligen Person über eine eindeutige Kennung gegeben ist, wobei der Abruf der personenspezifischen Daten aus der ersten Datenbank (110) mittels der eindeutigen Kennung als Primärschlüssel aus der ersten Datenbank (110) erfolgt.

10. Verfahren nach Anspruch 9, wobei die Erfassung der Präsenz der Personen in den Gefahrenbereichen (202; 206) umfasst: Lesen der durch den ID-Token bereitgestellten eindeutigen Kennung durch eines der Lesegeräte (208), wobei das Lesen durch Nahfeldkommunikation zwischen dem ID-Token und dem Lesegerät (208) erfolgt.

11. Verfahren nach einem der vorigen Ansprüche 8-10, wobei das Anmelden der dem ID-Token zugeordneten Person an dem Zeiterfassungsterminal umfasst:
- Erfassung des Anmeldevorgangs der dem ID-Token zugeordneten Person an dem Zeiterfassungsterminal durch ein Zeiterfassungsmodul,
- Mitteilung dieser Erfassung des Anmeldevorgangs durch das Zeiterfassungsmodul an das Evakuierungsmodul, wobei die Mitteilung ein Übermitteln von solchen Informationen umfasst, welche dem Evakuierungsmodul (108) die eindeutige Ermittlung der dem ID-Token zugeordneten Person unmittelbar oder unter Verwendung der ersten Datenbank (110) ermöglichen, wobei die Ausführung der Anweisungen des Evakuierungsmoduls (108) den Server (100) ferner steuern zum Registrieren der dem ID-Token zugeordneten Person als in dem jeweiligen Gefahrenbereich (202; 206) nicht mehr präsent auf Basis der übermittelten Informationen.

12. Verfahren nach einem der vorigen Ansprüche, ferner umfassend ein Zugriff auf eine dritte Datenbank (114), wobei die dritte Datenbank (114) für jeden der Gefahrenbereiche, für welche die Präsenz der Personen erfasst wurde, folgendes aufweist:
- Eine durch das Lesen der ID-Token erfasste Information, wobei die Information eine eindeutige Identifikation der den ID-Token zugeordneten Personen umfasst,
- Eine eindeutige Identifikation der Lesegeräte (208), mit welchen die Informationen von den ID-Token erfasst und gelesen wurde und/oder Ortsangaben der Gefahrenbereiche (202; 206), für welchen die Informationen von den ID-Token erfasst wurden,
- Eine Zeitangabe, zu welchem Zeitpunkt die Informationen von den ID-Token erfasst und gelesen wurden,
wobei der Abruf der personenspezifischen Daten unter Verwendung der eindeutigen Identifikation der Person und der Abruf der für den jeweiligen Gefahrenbereich (202; 206) spezifischen Daten unter Verwendung der eindeutigen Identifikation des Lesegeräts (208) erfolgt.

13. Verfahren nach einem der vorigen Ansprüche, wobei die in Schritt a) abgerufenen Personenstammdaten einen Basissatz von Personenstammdaten umfassen, wobei das Verfahren ferner den Empfang einer Anfrage eines ergänzenden Satzes von Personenstammdaten zu einer in den Evakuierungsdaten (124) angegebenen Person von dem mobilen Telekommunikationsgerät umfassen, wobei der ergänzende Satz von Personenstammdaten nicht in den Evakuierungsdaten (124) enthalten ist, wobei als Antwort auf die Anfrage des ergänzenden Satzes der Personenstammdaten dieser ergänzende Satz der Personenstammdaten aus der ersten Datenbank (110) abgerufen und an das mobile Telekommunikationsgerät (116) übermittelt wird.

14. Verfahren nach Anspruch 13, wobei
- der Basissatz der Personenstammdaten den bürgerlichen Namen der Person umfassen,
- der ergänzende Satz der Personenstammdaten ein Lichtbild der Person und/oder Vorerkrankungen der Person und/oder ein Alter der Person und/oder Kontaktdaten eines Vorgesetzten der Person umfassen und/oder eine Kennung eines Kommunikationsgerätes umfassen, über welches mit der Person bei der Präsenz im Gefahrenbereich (202; 206) Kontakt aufgenommen werden kann.

15. Verfahren nach einem der vorigen Ansprüche, wobei das Verfahren ferner den Empfang einer Anfrage von ergänzenden für den jeweiligen Gefahrenbereich (202; 206) spezifischen Daten zu einem in den Evakuierungsdaten (124) angegebenen Gefahrenbereich (202; 206) von dem mobilen Telekommunikationsgerät umfasst, wobei die ergänzenden für den jeweiligen Gefahrenbereich (202; 206) spezifischen Daten nicht in den Evakuierungsdaten (124) enthalten sind, wobei als Antwort auf die Anfrage der ergänzenden für den jeweiligen Gefahrenbereich (202; 206) spezifischen Daten diese ergänzenden für den jeweiligen Gefahrenbereich (202; 206) spezifischen Daten aus der zweiten Datenbank (112) abgerufen und an das mobile Telekommunikationsgerät (116) übermittelt werden.

16. Verfahren nach Anspruch 15, wobei die ergänzenden für den jeweiligen Gefahrenbereich (202; 206) spezifischen Daten mindestens eine der folgenden Angaben umfassen: In diesem Gefahrenbereich (202; 206)
- befindliches Gefahrgut,
- befindliche technische Anlagen,
- installierte Brandbekämpfungseinrichtungen,
- installierte Kommunikationseinrichtungen,
- installierte Überwachungskameras.

17. Verfahren zum Betrieb eines mobilen Telekommunikationsgeräts (116), wobei das Telekommunikationsgerät einen Prozessor (118) und einen Speicher (122) aufweist, wobei der Speicher (122) durch den Prozessor (118) ausführbare Anweisungen in Form einer Evakuierungsanwendung (126) enthält, wobei die Ausführung der Anweisungen durch den Prozessor das mobile Telekommunikationsgerät (116) steuert zum:
- Empfang von Evakuierungsdaten (124) von einem Server (100), wobei die Evakuierungsdaten (124) Personenstammdaten von Personen, deren Präsenz in Gefahrenbereichen (202; 206) durch den Gefahrenbereichen (202; 206) zugeordnete Lesegeräte (208) elektronisch erfasst wurden, sowie für die Gefahrenbereiche (202; 206) spezifischen Daten umfassen, wobei die für den Gefahrenbereich (202; 206) spezifischen Daten den personenspezifischen Daten entsprechend der Präsenz der Personen in dem jeweiligen Gefahrenbereich (202; 206) zugeordnet sind,
- Zwischenspeicherung der Evakuierungsdaten (124) durch das mobile Telekommunikationsgerät (116),
- Auf Benutzeranforderung Aufbau einer Evakuierungsliste auf einer grafischen Benutzeroberfläche des mobilen Telekommunikationsgeräts (116), wobei die Evakuierungsliste die Evakuierungsdaten (124) umfasst.

18. Computerprogrammprodukt mit von einem Prozessor ausführbaren Instruktionen zur Durchführung des Verfahrens nach einem der vorigen Ansprüche.

19. System zur Zugangskontrolle zu Gefahrenbereichen (202; 206), wobei das System einen Server (100) aufweist, wobei der Server (100) einen Prozessor (102) und einen Speicher (106) aufweist, wobei der Speicher durch den Prozessor ausführbare Anweisungen in Form eines Evakuierungsmoduls (108) enthält, wobei das Verfahren eine elektronische Erfassung der Präsenz von Personen in den Gefahrenbereichen (202; 206) durch den Gefahrenbereichen (202; 206) zugeordnete Lesegeräte (208) umfasst, wobei das Erfassen über ein Lesen eines ID-Token durch die Lesegeräte (208) erfolgt, wobei der ID-Token eindeutig der Person zugeordnet ist, wobei die Ausführung der Anweisungen durch den Prozessor den Server (100) steuert zum:
a) Für die Personen, deren Präsenz erfasst wurde, Abruf von personenspezifischen Daten aus zumindest einer ersten Datenbank (110), wobei die personenspezifischen Daten Personenstammdaten umfassen,
b) Für die Lesegeräte (208), mit denen die Präsenz der Personen erfasst wurde, Abruf von für den jeweiligen Gefahrenbereich (202; 206) spezifischen Daten aus zumindest einer zweiten Datenbank (112), wobei die für den Gefahrenbereich (202; 206) spezifischen Daten Ortsangaben des Gefahrenbereichs (202; 206) umfassen,
c) Erzeugen von Evakuierungsdaten (124), wobei die Evakuierungsdaten (124) die Personenstammdaten der Personen, deren Präsenz erfasst wurde, sowie die für den Gefahrenbereich (202; 206) spezifischen Daten umfassen, wobei die für den Gefahrenbereich (202; 206) spezifischen Daten den personenspezifischen Daten entsprechend der Präsenz der Personen in dem jeweiligen Gefahrenbereich (202; 206) zugeordnet sind,
d) Übermitteln der Evakuierungsdaten (124) an ein mobiles Kommunikationsgerät zur Zwischenspeicherung der Evakuierungsdaten (124) durch das mobile Telekommunikationsgerät (116),
e) Automatische zyklische Wiederholung der Schritte a)-d) in bestimmten Zeitintervallen.

20. Mobiles Telekommunikationsgerät (116), wobei das Telekommunikationsgerät einen Prozessor (118) und einen Speicher (122) aufweist, wobei der Speicher (122) durch den Prozessor (118) ausführbare Anweisungen in Form einer Evakuierungsanwendung (126) enthält, wobei die Ausführung der Anweisungen durch den Prozessor das mobile Telekommunikationsgerät (116) steuert zum:
- Empfang von Evakuierungsdaten (124) von einem Server (100), wobei die Evakuierungsdaten (124) Personenstammdaten von Personen, deren Präsenz in Gefahrenbereichen (202; 206) durch den Gefahrenbereichen (202; 206) zugeordnete Lesegeräte (208) elektronisch erfasst wurden, sowie für die Gefahrenbereiche (202; 206) spezifischen Daten umfassen, wobei die für den Gefahrenbereich (202; 206) spezifischen Daten den personenspezifischen Daten entsprechend der Präsenz der Personen in dem jeweiligen Gefahrenbereich (202; 206) zugeordnet sind,
- Zwischenspeicherung der Evakuierungsdaten (124) durch das mobile Telekommunikationsgerät (116),
- Auf Benutzeranforderung Aufbau einer Evakuierungsliste auf einer grafischen Benutzeroberfläche des mobilen Telekommunikationsgeräts, wobei die Evakuierungsliste die Evakuierungsdaten (124) umfasst.
